# EUROPEAN PATENT SPECIFICATION

(11) **EP 1 552 986 B1**
(45) Date of publication and mention of the grant of the patent: **03.01.2007**
(21) Application number: 04380003.6
(22) Date of filing: 08.01.2004
(51) Int. Cl.: B60R 13/02, B60R 7/04, B60R 11/00

(54) **Support structure for an interior overhead console of panoramic roofs of automotive vehicles**
Stützstruktur für eine Innenraumkonsole des Panoramadaches eines Kraftfahrzeuges
Structure de support pour une console intérieure d'un toit panoramique de véhicules automobiles

(43) Date of publication of application: 13.07.2005
(73) Proprietor: GRUPO ANTOLIN-INGENIERIA, S.A., 09007 Burgos (ES)
(72) Inventor: Santaolalla Gil, Joaquin, 09003 Burgos (ES); Herrero Fuente, Carlos, 09001 Burgos (ES); Lugo Rodriguez, Omar, 09002 Burgos (ES)
(74) Representative: Esteban Perez-Serrano, Maria Isabel

(56) References cited:
- US-A- 4 161 336
- US-A- 4 738 481
- US-A- 5 105 521
- US-A- 5 303 970
- US-A- 5 667 896
- US-B1- 6 176 536

## Description

The present invention refers to a support structure for an interior overhead console of automotive vehicles, constituted such that it allows safe assembly of said console, as well as the arrangement of interchangeable compartments.

Overhead consoles of vehicles constitute the means for arranging different accessories, such as lights, switches, speakers, etc., for services of the compartment or interior in which the console is arranged.

The assembly of these consoles on the trim of the roof is known. This system requires a special design of the trim, since it must support not only the weight of the console, but also the stresses which may be exerted on it when actuating certain accessories assembled thereon. In this sense, US patents US 6,575,528 and US 6,338,517 can be mentioned, which add a structural element to the trim of the roof for anchoring the console modules. In the same sense, Japanese patents JP 001130327, JP 11192892 and JP 08150880 can be mentioned, in which the console is provided with an anchoring and reinforcement plate, but where the trim supports the weight and stresses exerted on said console.

Fixing the console to some structural element of the vehicle is also known. In this sense, US patent 5,062,559 can be mentioned, in which the console is anchored to a closed roof and the entire console constitutes an independent module in the trim, which makes accessibility thereof difficult. In the case of panoramic roofs, anchoring the console to the roof and frame is known, as disclosed in US patent 6,065,793, where the console is not covered by the trim.

It is known from the State of the Art a dual-opening sun-roof unit for automobiles as the one disclosed in the generic document US4161336 which includes a pair of juxtaposed openings having transparent, movable panels supported on individual, resilient mouldings. Each opening is defined by a peripheral frame structure mounted within an aperture cut in the vehicle roof. The frame includes a central, dividing strut member. One transparent panel is located over the driver's side of the vehicle and the other panel is located over the passenger side.

The central dividing strut member is formed having a recess compartment. Each transparent panel includes a separate latch arranged at the rear edge of the panel, with hinge members mounted along the forward edge of the window and frame opening. Each panel is permitted to pivot to an elevated position separately from the other.

Nevertheless the opening sun-roof disclosed in US 4161336 does not provide a support structure for an interior overhead console, offering new spaces arranging different accessories, such as lights, switches, speakers etc wherein the elements thereof are interchangeable, and the means used for connecting the console assembly to the structural components of the roof remains hidden.

The object of the present invention is a support structure for an interior overhead console of automotive vehicles, constituted such that its anchoring is carried out on the resistant elements of the vehicle roof, and such that the trim not only undergoes no stress coming from said console, but that it is even partially supported by it.
Ought to enlargement of vehicle size tendency, distance from a crosspiece of vehicle roof chassis to the nearest one has increased too. An example of such issue takes place on MPVs (Multi Purpose Vehicle), MAVs (Multi Activity Vehicle) and SUVs (Sport Utility Vehicle). Besides, new interior equipment has to be added to and heavier components have been included in roof area: entertainment devices, storage box, etc. These factors give rise to new exigencies in overhead trays, which has to fulfil those extra strengths. To solve it some solutions has been adopted, for instance, to be built in stronger materials: reinforced plastic, metal alloy, etc., and/or to be supported directly on vehicle structure.

Another object of the invention is to develop a structure allowing the interchangeability of the components or elements thereof.

A further object of the invention is to achieve a console assembly system, by means of which the structural components of the roof, and of the structure by means of which the console is assembled, remain hidden.

These and other objectives are obtained with the structure of the invention, by means of its constitution of independent elongated trays, one or more trays, which are open at one of their larger walls and are anchored to the crosspieces of the vehicle roof chassis. Said trays define housings for the assembly of interchangeable compartments.

The trays are provided on their smaller walls with coupling means for coupling onto the crosspiece, and are provided on said walls and on the bottom with holes for the passage of pre-assembly and fixing elements for fixing to the crosspieces.

The purpose of the pre-assembly elements is to place the part in its final position by means of a correct positioning and non-permanent anchoring, facilitating the task of fixing the part. The pre-assembly elements can vary: centering devices, clips, tabs, etc. One combination for the tray described includes centering devices and clips.

The purpose of the fixing elements is to permanently anchor the part in its final position. The fixing elements can be: screws, clips, adhesives, rivets, etc. Screws are included as the fixing elements for the tray described.

The trays will be arranged with the open wall towards the interior of the vehicle, and will be finished with an outer flange on which a decorative frame is fixer, between which frame and said flanges the trim of the roof will be retained such that the structure of the invention, through this frame, serves as a retention element and partially as a support element of the trim of the roof, without transmitting to it any action or effect due to the weight of the structure itself and console, nor due to the actions or manipulations which may be carried out on said console.

The constitution set forth allows the interchangeability of the compartments which are assembled in the trays and which will bear the different accessories.

On the other hand, tray assembly and removal can be carried out from the interior of the vehicle, since its fixing to the crosspieces of the vehicle roof is carried out by means of easily accessible screws. These trays are completely hidden by means of the compartments bearing the accessories and by means of the decorative frame, and partially by the trim of the roof of the vehicle.

Fastening of the compartments is also carried out by means of screws, which can be operated from the interior of the vehicle, such that the interchangeability of such compartments can be carried out even by the user of the vehicle.

The trays will preferably be constituted of the basis of a light metal alloy and can adopt an approximately rectangular right prismatic configuration, open at one of their larger walls. The number of trays making up the structure will vary, depending on the vehicle type.
In order to define and to identify tray's different parts, and according to its final position in vehicle, being watched the vehicle from its front part and considering that trays are aligned in the lengthwise direction of the vehicle, tray walls can be defined as follows: front wall, rear wall, right sidewall, left sidewall, upper wall and lower wall. Therefore, the open wall above mentioned corresponds to the lower wall now so defined

The trays rest on the crosspieces of the vehicle roof between which the trays are arranged through the bottom of one of its ends and also through the adjacent smaller tray wall, the support areas being provided with holes facing holes of the crosspieces for the passage of centering devices, fastening clips and lockscrews.

Due to its special constitution and manner of assembling the trays, the structure of the invention allows anchoring interchangeable compartments, even those having different configurations, assembling and removing these compartments from the interior of the vehicle, as previously indicated. For this purpose, the trays are provided with anchoring or metal inserts for fastening the compartments.

All the features and advantages set forth, as well as others pertinent to the invention, will be clearly shown with the following description, with the aid of the attached drawings which show one non-limiting embodiment.

In the drawings:
Figure 1 shows a schematic exterior perspective view of a structure constituted according to the invention and consisting of two trays, assembled on the interior of an automotive vehicle roof.
Figure 2 shows an interior perspective view of the assembly of figure 1, shown in an inverted position.
Figure 3 shows an exterior perspective view of one of the trays forming part of the structure of figure 1.
Figure 4 shows a lower perspective view of the tray of figure 3.
Figure 5 shows a partial perspective view of the meeting point of one of the trays forming part of the structure of the invention with the front crosspiece of the vehicle roof.
Figure 6 shows a sectional view of the meeting point of one of the trays with the front crosspiece of the vehicle roof, taken along the VI-VI cut line of figure 5.
Figure 7 shows a cross sectional view of the central or intermediate crosspiece of the vehicle roof, which two of the trays of the structure concur on and are connected to.
Figure 8 shows a partial perspective view of the meeting point between one of the trays forming the structure and the rear crosspiece of the vehicle roof.
Figure 9 shows a sectional view of the meeting point between one of the trays forming the structure and the rear crosspiece of the vehicle roof taken along the IX-IX cut line of figure 8.
Figure 10 shows an interior perspective view of the console and trim, with the decorative frame thereof.
Figure 11 shows a plan view of a detail of the connection area for connecting the trays forming the structure of the invention with the trim by means of the decorative frame.
Figure 12 shows a sectional view of the connection area for connecting the trays to the trim, taken along the XII-XII cut line of figure 11.
Figure 13 shows a schematic cross sectional view of one of the trays forming the structure of the invention with a compartment assembled inside it.

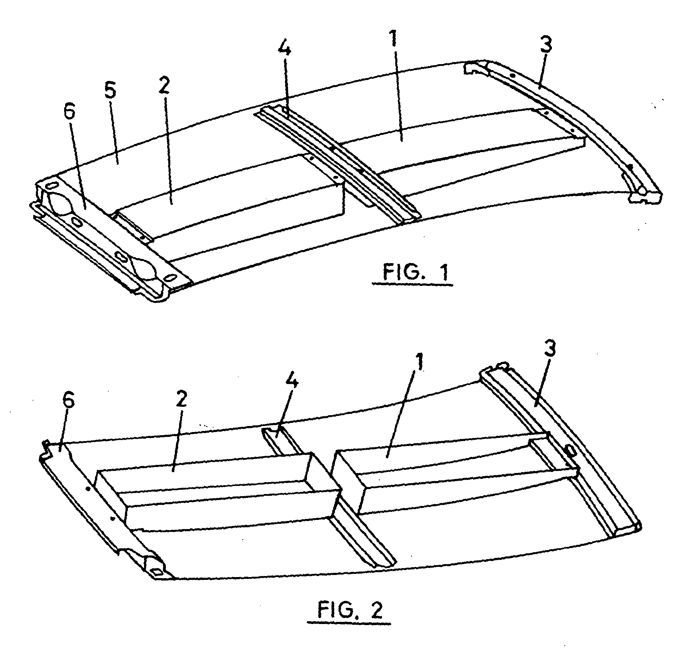

The support structure of the console shown in the drawings, as can best be seen in figures 1 and 2, consists of two trays, referenced with numbers 1 and 2, carried out in a light metal alloy material, which are open at its lower wall, which is facing the interior of the vehicle. The tray 1 is assembled between the front crosspiece 3 of the vehicle roof and intermediate crosspiece 4 of the roof 5 of the vehicle, whereas the tray 2 is assembled between the intermediate crosspiece 4 and the rear crosspiece 6.

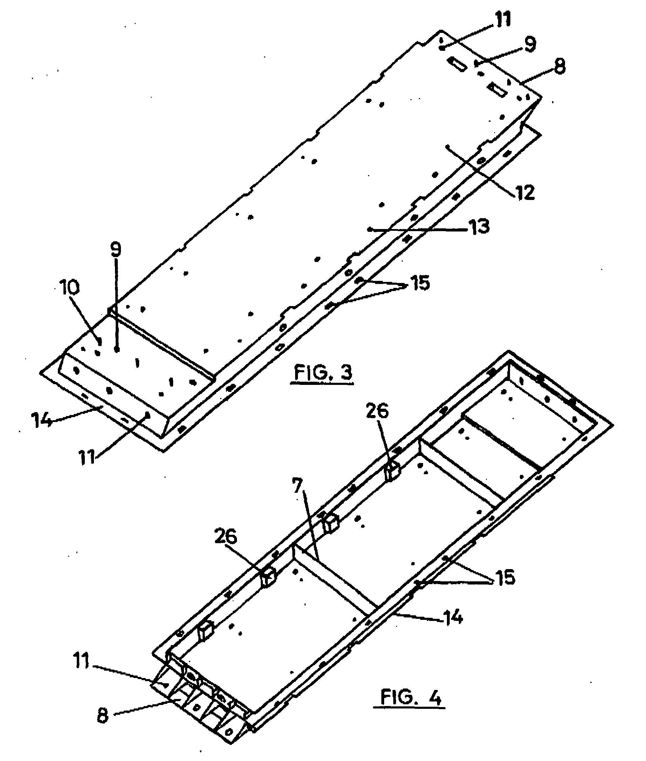

As can be seen in figures 3 and 4, these trays have an overall right rectangular prismatic configuration, open at its lower wall and can include intermediate reinforcement partitions 7, as well as a flange or tabs 8 from one of the front or rear walls, designed to rest on the intermediate crosspiece 4 of the vehicle roof chassis, as will be explained below.

The trays 1 and 2 are aligned in the lengthwise direction of the vehicle, and their number can vary depending on the features or dimensions of said vehicle. In the example shown in the drawings, the tray 1 will correspond to the front half of the vehicle and tray 2 to the rear half.

The trays 1 and 2 can rest on the crosspieces of the vehicle roof in which they concur through their front or rear walls, through its upper wall or both, these support areas including coupling means or shaping for coupling onto the crosspieces, as well as holes for the passage of centering devices 9 for centering the trays to the crosspiece, tray fastening clips 10 and holes 11 for the passage of lockscrews. The centering devices 9 and clips 10 serve as pre-assembly elements, said assembly being secured by the lockscrews. The upper wall of the trays is also provided with holes 12 for centering the interchangeable compartments assembled inside the trays, as will be explained below, and with holes 13 for the rapid fixing of these compartments.

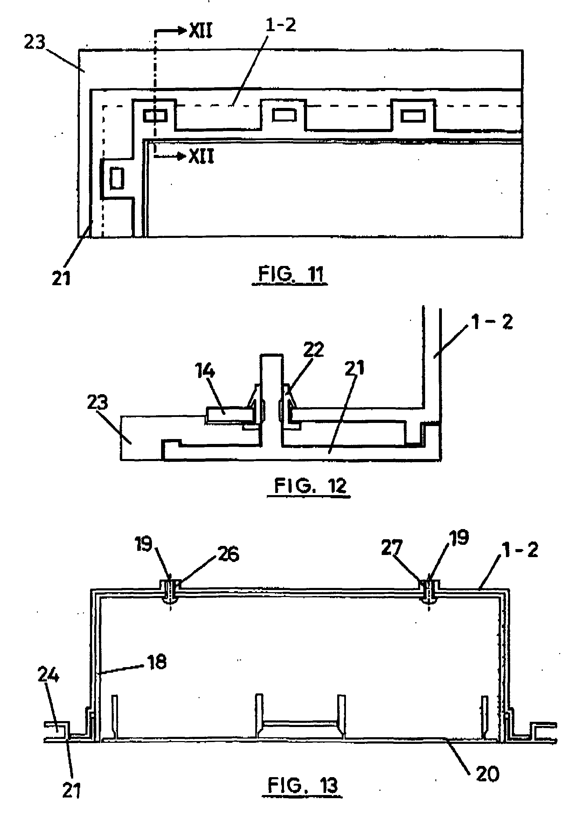

From the lower wall, the trays are provided with a peripheral flange 14, where holes 15 have been made for anchoring a decorative frame, as will be explained in reference to figures 11 to 13.

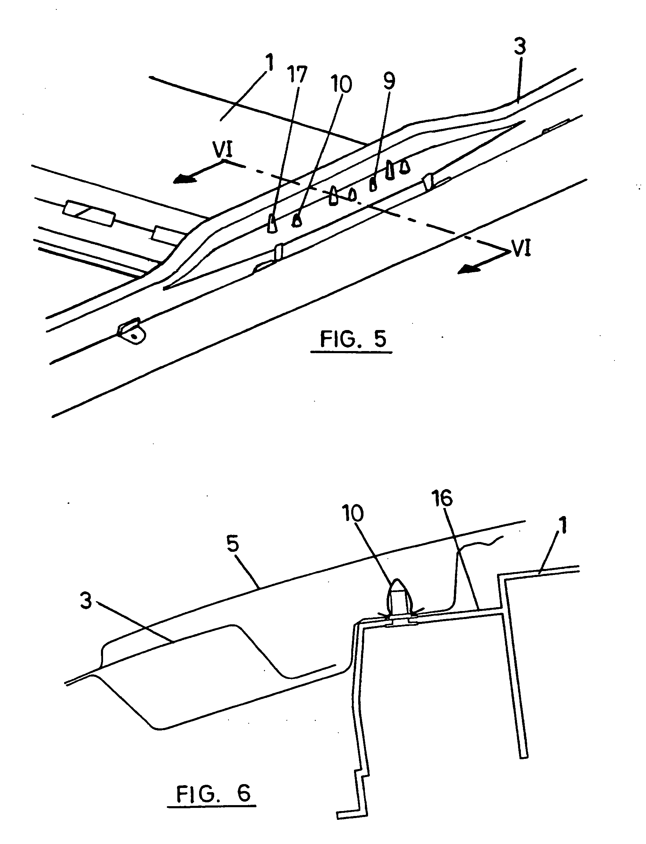

As can be seen in figures 5 to 6, at the meeting point between the tray 1 and crosspiece 3 of the vehicle roof, said tray is coupled onto the crosspiece by means of a transverse shaping or step 16, although in any case the tray 1 will lack such shaping or it will have a different shaping according to the shape of the area of the crosspiece 3 on which it rests and is coupled. Figure 5 shows one of the centering devices 9, fastening clips 10 and lockscrews 17 for fixing the tray to the crosspiece. Figure 6 shows one of the fastening clips 10. The remaining components are hidden in this view.

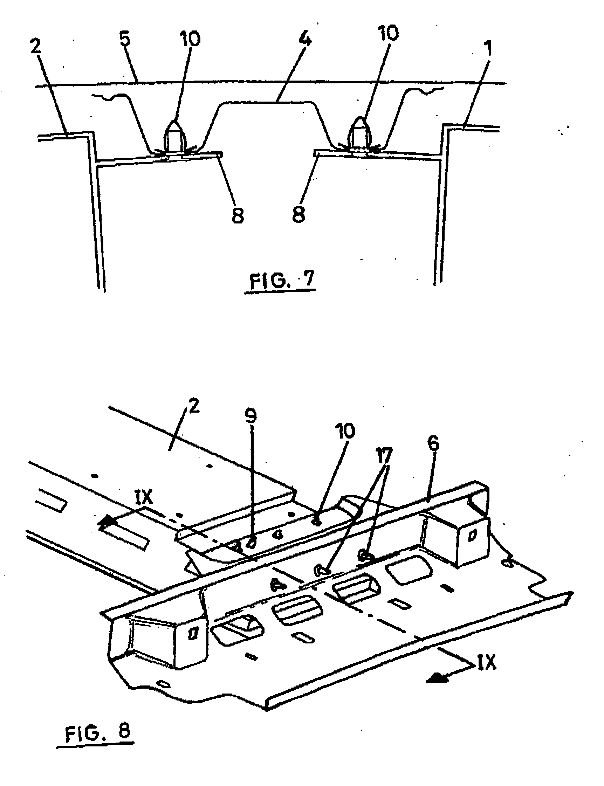

Figure 7 shows two fastening clips 10 for fastening the front trays 1 and rear trays 2 to the central or intermediate crosspiece 4 of the vehicle roof.

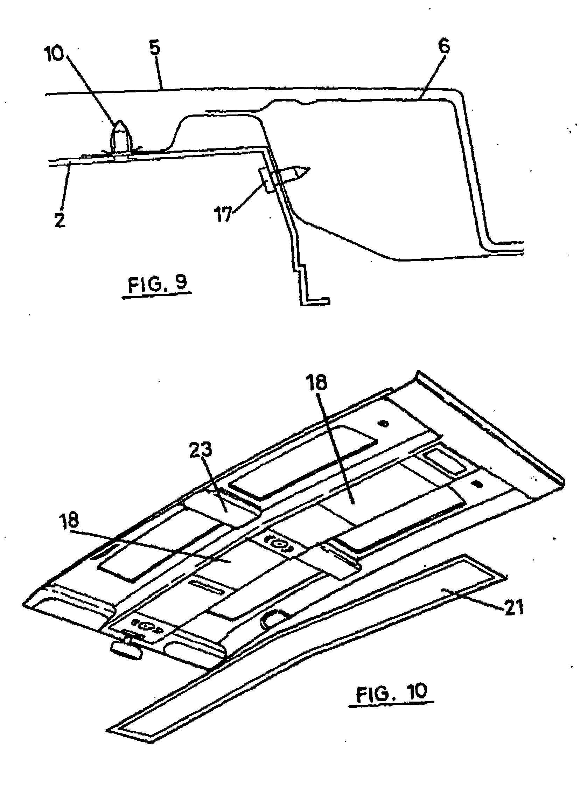

For their part, Figures 8 and 9 show the meeting and fixing point where the tray 2 is fixed to the rear crosspiece 6 of the vehicle roof. Figure 8 shows the centering device 9 for centering the tray 2 to the crosspiece 6, the fastening clips 10 and lockscrews 17. Figure 9 shows one of the fastening clips 10 and one of the lockscrews 17 for fixing the tray 2 to the crosspiece 6, these being self-tapping screws.

Once the trays 1 and 2 are assembled on the crosspieces of the vehicle roof the interchangeable compartments 18 are placed therein by means of the holes 13 of the trays, figure 2, for example with the aid of screws 19, figure 13. The interchangeable compartments 18 are closed by means of a cover 20.

A decorative frame 21 is arranged around the trays, which frame, as seen in figures 11 and 12, is fixed to the peripheral flange 14 of the trays by means of clips 22 introduced through the holes 15 of the peripheral flange. The trim 23 of the roof can be partially introduced between the frame 21 and the peripheral flange 14.

In the embodiment in figure 13, the frame 21 forms a peripheral groove 24 in which the trim 23 can be introduced.

The assembly of compartments 18 occupying the trays 1 and 2 form the overhead console of the vehicle.

The opening of the cover 20 of the interchangeable compartments can be carried out by any system, for example by means of a button or push-button forming part of the trays 1 and 2 themselves. Furthermore, the trays 1 and 2 can be provided on their internal surface, as seen in figure 4, with guides 26 ensuring correct positioning of the compartments in the trays.

For the purpose of allowing assembly and removal of the interchangeable compartments without damaging the structure of the trays 1 and 2, the lockscrews 19 of the compartments will not be fixed directly to the tray, but rather to metal inserts 27.

As indicated, the shapings of the trays in the coupling areas for coupling onto the crosspieces of the vehicle roof, as well as the existence or not of flanges for such a purpose, will depend on the shape of the crosspiece in the areas which the trays must be fixed on.

As can be seen in figure 10, the structure of the invention is specially designed for its application in panoramic roofs of vehicles.

## Claims

1. A support structure for an interior overhead console of panoramic roofs of automotive vehicles, constituted of one or more elongated trays (1, 2) the tray (1, 2) having a smaller front and rear wall, a right and left wall and a larger lower wall, the tray being open at its lower wall, **characterized in that** the tray is anchored to crosspieces (3, 4, 6) of the roof (5) of the vehicle, the tray (1, 2) defining housings therein for the assembly of interchangeable compartments (18); which tray is externally provided, at its front and rear wall, with shapings (8,16) for coupling onto the crosspieces of the roof, as well as with holes (11, 12, 13) for the passage of pre-assembly and fixing elements (9, 10, 17, 19) for fixing the tray to the crosspieces; the tray further including an outer peripheral flange (14) provided from the lower wall of the tray which a decorative frame (21) is arranged and fixed on whereby the trim (23) of the roof is retained between said frame and said outer flange.

2. A structure according to claim 1, **characterized in that** the tray (1-2) is constituted of a light metal alloy.

3. - A structure according to claim 1, **characterized in that** the tray (1-2) restson the crosspieces (3, 4, 6) of the vehicle roof between which it is arranged through the bottom and adjacent front and rear wall of said tray, being provided in the rest areas with holes facing holes of the crosspieces for the passage of the pre-assembly and fixing elements.

4. - A structure according to claim 3, **characterized in that** the pre-assembly and fixing elements include centering devices (9), fastening clips (10) and lockscrews (17).

5. - A structure according to claim 1, **characterized in that** the tray is provided with anchorings or metal inserts (27) for fastening the compartments (18), which allow the assembly and removal of said compartments from the interior of the vehicle.

6. - A structure according to claims 1 and 5, **characterized in that** the tray (1, 2) is provided on its walls with guides (26) for the correct positioning of the compartments (18), and provided on the bottom with holes for the inserts (27) which the lockscrews (19) for fastening said compartments are screwed into.

## Patentansprüche

1. Ein Tragwerk für das Innere einer Kopfkonsole für Schiebedächer in Fahrzeugen bestehend aus einem oder zwei länglichen Tabletts (1, 2), wobei das Tablett (1, 2) eine kleinere Vorder- und Rückwand aufweist, eine rechte und linke Wand und eine größere untere Wand und es an der unteren Wand geöffnet ist, **dadurch gekennzeichnet, dass** das Tablett an Querstücken (3, 4, 6) des Fahrzeugdachs (5) befestigt ist, wobei das Tablett (1, 2) Gehäuse für die Montage auswechselbarer Abteilungen (18) definiert; dieses Tablett verfügt außen, an seiner Vorder- und Rückwand, über Konturen (8, 16) für das Anbringen an den Querstücken des Dachs sowie über Löcher (11, 12, 13) für den Durchtritt der Elemente zur Vormontage und Befestigung (9, 10, 17, 19), um das Tablett an den Querstücken zu befestigen; das Tablett verfügt außerdem über einen äußeren, umfänglichen Kragen (14), ausgehend von der unteren Wand des Tabletts, auf dem ein dekorativer Rahmen (21) angebracht und befestigt ist, wobei die Zierleiste (23) des Dachs zwischen besagtem Rahmen und besagtem Kragen gehalten wird.

2. Eine Struktur gemäß Anspruch 1, **dadurch gekennzeichnet, dass** das Tablett (1, 2) aus einer Leichtmetalllegierung besteht.

3. Eine Struktur gemäß Anspruch 1, **dadurch gekennzeichnet, dass** das Tablett (1, 2) auf den Querstücken (3, 4, 5) des Fahrzeugdachs lagert und zwischen ihnen durch die untere und anliegende vordere und hintere Wand des besagten Tabletts befestigt ist und in den Auflagebereichen Löcher aufweist, die sich gegenüber von Löchern in den Querstücken für den Durchlass der Elemente zur Vormontage und Befestigung befinden.

4. Eine Struktur gemäß Anspruch 3, **dadurch gekennzeichnet, dass** die Elemente zur Vormontage und Befestigung Zentriervorrichtungen (9), Befestigungsklammern (10) und Anzugsschrauben (17) aufweisen.

5. Eine Struktur gemäß Anspruch 1, **dadurch gekennzeichnet, dass** das Tablett (1,2) mit Verankerungs- oder Metalleinsätzen (27) versehen ist, um die Abteilungen (18) zu befestigen, die Montage und Abbau der besagten Abteilungen im Fahrzeuginneren erlauben.

6. Eine Struktur gemäß den Ansprüchen 1 und 5, **dadurch gekennzeichnet, dass** das Tablett (1, 2) an seinen Wänden mit Führungen (26) versehen ist, um die Abteilungen richtig zu positionieren (18) und am Boden Löcher aufweist für die Einsätze (27), in die die Anzugsschrauben (19) für das Befestigen der besagten Abteilungen eingeschraubt werden.

## Revendications

1. Une structure de support pour une console supérieure intérieure de toits panoramiques de véhicules automobiles constituée d'un ou plusieurs plateaux (1, 2) allongés, le plateau (1, 2) ayant une paroi avant et arrière plus petite, une paroi droite et gauche et une paroi inférieure plus grande, le plateau étant ouvert sur sa paroi inférieure, **caractérisée en ce que** le plateau est fixé aux traverses (3, 4, 6) du toit (5) du véhicule. Le plateau (1, 2) définissant des logements en son sein pour l'assemblage de compartiments échangeables (18) ; ledit plateau est pourvu de manière centrale sur sa paroi avant et arrière, d'écrêtements (8, 16) pour s'accoupler sur les traverses du toit, ainsi que d'orifices (11, 12, 13) pour le passage d'éléments de pré-montage et de fixation (9, 10, 17, 19) pour fixer le plateau aux traverses ; le plateau incluant, en outre, un rebord périphérique extérieur (14) pourvu à partir de la paroi inférieure du plateau, sur lequel un cadre décoratif (21) est disposé et fixé, la moulure (23) étant ainsi retenue entre ledit cadre et ledit rebord extérieur.

2. Une structure selon la revendication 1, **caractérisée en ce que** le plateau (1-2) est constitué d'un alliage métallique léger.

3. Une structure selon la revendication 1, **caractérisée en ce que** le plateau (1-2) repose sur les traverses (3, 4, 6) du toit du véhicule entre lesquelles il est disposé à travers la paroi inférieure et attenante avant et arrière dudit plateau, en étant pourvu, dans les zones de repos, d'orifices en regard des orifices des traverses pour le passage des éléments de pré-montage et de fixation.

4. Une structure selon la revendication 3, **caractérisée en ce que** les éléments de pré-montage et de fixation incluent des dispositifs (9) de centrage, des pinces d'agrafage clips (10) et des vis de blocage (17).

5. Une structure selon la revendication 1, **caractérisée en ce que** le plateau est pourvu d'ancrages ou d'inserts métalliques (27) pour fixer les compartiments (18), lesquels permettent le montage et le retrait desdits compartiments de l'intérieur du véhicule.

6. Une structure selon les revendications 1 à 5, **caractérisée en ce que** le plateau (1, 2) est pourvu, sur ses parois, de guides (26) pour le positionnement correct des compartiments (18), et pourvu, sur la partie inférieure, d'orifices pour les inserts (27), dans lesquels sont vissées les vis de blocage (19) pour la fixation desdits compartiments.
